# EUROPEAN PATENT APPLICATION

(11) **EP 4 625 452 A1**
(43) Date of publication of application: **01.10.2025**
(21) Application number: 23894617.2
(22) Date of filing: 22.11.2023
(51) Int. Cl.: H01F 27/245, C21D 8/12, C22C 38/00, C22C 38/60, H01F 1/147

(54) **WOUND CORE**

(30) Priority: 22.11.2022 JP 2022186427
(71) Applicant: NIPPON STEEL CORPORATION, Chiyoda-ku Tokyo 100-8071 (JP)
(72) Inventor: IWAKI, Masataka, Tokyo 100-8071 (JP); TAKAHASHI, Masaru, Tokyo 100-8071 (JP); MOGI, Hisashi, Tokyo 100-8071 (JP); WADA, Naoki, Tokyo 100-8071 (JP); HAMAMURA, Hideyuki, Tokyo 100-8071 (JP)
(74) Representative: Vossius & Partner Patentanwälte Rechtsanwälte mbB
(86) International application number: PCT/JP2023/041931
(87) International publication number: WO 2024/111613

(57) **Abstract**

A wound core further reduced in BF by controlling a residual stress due to a shape of the grooves and strain at a bent part to within a predetermined range, that is, a wound core comprised of grain-oriented electrical steel sheet, in which wound core, the grain-oriented electrical steel sheet has a steel sheet surface in which is formed a groove extending in a direction crossing a rolling direction (RD direction) and having a groove depth direction comprised of a sheet thickness direction (ND direction), a pitch in the steel sheet rolling direction (RD direction) of the groove is 2 to 10 mm, a depth of the groove is 10 µm or more and 40 µm or less and a width of the groove is 10 µm or more and 200 µm or less, an angle formed when facing wall surfaces of the groove (surfaces of groove present at depth of 25 to 75% of the depth of the groove being defined as "wall surfaces") are stretched in the sheet thickness direction (ND direction) (sometimes also referred to as the "vertex angle") is 90° or less, and, in a range of within 10 µm from a wall surface of the groove present at a bent part of the wound core to the steel sheet rolling direction (RD direction), a region in which 10 MPa or more residual stress is present due to tensile strain in the steel sheet rolling direction (RD direction) is 10 area% or more.

## Description

### FIELD

The present invention relates to a wound core, more particularly a wound core suppressed in building factor (BF).

### BACKGROUND

Grain-oriented electrical steel sheet is being used as magnetic cores in numerous electrical equipment. Grain-oriented electrical steel sheet is steel sheet containing Si in about 1.0% to 5.0% and having a crystal orientation of the product controlled to the {110}<001> orientation to a high degree. Grain-oriented electrical steel sheet is excellent in magnetic properties and, for example, is utilized as the core material of transformers and other stationary inductors. For that purpose, as magnetic properties, a high magnetic flux density as represented by the B₈ value and a low core loss as represented by W17/50 are in demand.

In particular, in transformers, one of the applications of grain-oriented electrical steel sheet, lower core loss is being sought for saving energy and considerations about the surrounding environment. For this reason, in recent years, development efforts have been underway to lower the core loss of the grain-oriented electrical steel sheet itself.

Cores of transformers include stacked cores and wound cores. Among these, wound cores are generally produced by stacking grain-oriented electrical steel sheets in layers, winding them into a donut shape (wound shape), then pressing the wound body to form it into a substantially block shape (in this Description, such a produced wound core will sometimes be called a "TRANCO core"). Mechanical processing strain (plastic deformation strain) enters the grain-oriented electrical steel sheet due to this shaping step. This processing strain becomes a factor causing great deterioration of the core loss of grain-oriented electrical steel sheet. To eliminate the effects of this processing, stress relief annealing is performed. However, further reduction is sought in the ratio of the core loss of a core to core loss of the steel sheet material, the so-called "building factor (BF)."

PTL 1 discloses grain-oriented electrical steel sheet and a wound core using the same focusing on the noise properties while considering reduction of core loss as well. Specifically, it discloses that excellent noise properties are obtained by the electrical steel sheet having a specific range of amount of warping and that core loss can be reduced by applying thermal strain or forming grooves in that electrical steel sheet.

### [CITATIONS LIST]

### [PATENT LITERATURE]

[PTL 1] Japanese Unexamined Patent Publication No. 2020-56080

### SUMMARY

### [TECHNICAL PROBLEM]

The wound core used for transformers is being required to be made further lower in core loss. The electrical steel sheet forming the base material is being formed with linear shaped grooves or given strain so that 180° domain widths are divided and along with this eddy current loss constituting part of the core loss is reduced. However, further reduction of the deterioration of the iron loss, the so-called building factor (BF), is being sought when working electrical steel sheet into a wound core.

The present invention was made considering the above technical problem. In the wound core, in particular the core loss greatly deteriorates at the bent parts of the steel sheet. Suppressing deterioration of the core loss at the bent parts (sometimes also referred to as the ("bending parts" or "curved parts") is important for reducing the BF of the wound core. The present invention has as its object to further reduce the BF of a wound core by controlling the residual stress due to the shape of the grooves and the strain at the bent parts to certain ranges.

### [SOLUTION TO PROBLEM]

The inventors discovered that in wound cores, it is possible to provide a wound core able to reduce the BF over the past by giving the grain-oriented electrical steel sheet used there residual stress due to strain at grooves and bent parts of predetermined shapes.

The gist of the present invention is a wound core comprising grain-oriented electrical steel sheet having residual stress due to strain in the vicinity of a groove, in which wound core, the grain-oriented electrical steel sheet has a steel sheet surface on which is formed a groove extending in a direction crossing a rolling direction (RD direction) and having a groove depth direction comprised of a sheet thickness direction (ND direction), and the groove satisfies the following conditions:
a. A pitch in the steel sheet rolling direction (RD direction) of the groove is 2 to 10 mm.
b. A depth of the groove is 10 µm or more and 40 µm or less and a width of the groove is 10 µm or more and 200 µm or less.
c. An angle formed when facing wall surfaces of the groove (surfaces of groove present at depth of 25 to 75% of the depth of the groove being defined as "wall surfaces") are stretched in the sheet thickness direction (ND direction) (sometimes also referred to as the "vertex angle") is 90° or less.
d. In a range of within 10 µm from a wall surface of the groove present at a bent part of the wound core to the steel sheet rolling direction (RD direction), a region in which 10 MPa or more residual stress is present due to tensile strain in the steel sheet rolling direction (RD direction) is 10 area% or more.

### [ADVANTAGEOUS EFFECTS OF INVENTION]

According to the present invention, it is possible to provide a wound core which can further reduce the BF from the past by being a wound core in which the grain-oriented electrical steel sheet used has residual stress due to a predetermined shape of the grooves and strain at the bent parts.

### BRIEF DESCRIPTION OF DRAWINGS

FIG. 1 is a plan view showing one example of a wound core according to one embodiment of the present invention.
FIG. 2 is a cross-sectional view of a groove part of grain-oriented electrical steel sheet according to one embodiment of the present invention (cross-sectional view vertical to direction of extension of groove).
FIG. 3 is a view schematically showing one example of a bent part (curved part) of grain-oriented electrical steel sheet.

### DESCRIPTION OF EMBODIMENTS

Below, preferred embodiments of the present invention will be explained in detail. It should be noted that, unless particularly indicated otherwise, for numerical values A and B, the expression "A to B" shall mean "A or more and B or less." In such expressions, when only the numerical value B is given a unit, that unit shall also be deemed to apply to the numerical value A.

First, the wound core according to the present embodiment is comprised of grain-oriented electrical steel sheet. The grain-oriented electrical steel sheet is not particularly limited. Grain-oriented electrical steel sheet comprised of known steel constituents can be used. Such grain-oriented electrical steel sheet able to be used for the wound core according to the present invention will be explained illustratively below:

### [Chemical Composition of Steel Sheet]

A typical chemical composition of steel sheet will be explained below. It should be noted that, below, unless particularly indicated otherwise, the expression "%" shall indicate "mass%."

The constituents of the steel sheet used for the grain-oriented electrical steel sheet according to the present invention are preferably designed for controlling the sheet to a texture in which the crystal orientation is integrated to the {110}<001>orientation (Goss orientation) and contains at least Si: 1.0 to 5.0% and Mn: 0.01 to 0.15%.

### (Si: 1.0 to 5.0%)

The content of Si (silicon) is 1.0 to 5.0%. Si raises the electrical resistance of steel sheet and thereby reduces the eddy current loss - one of the causes of core loss. If the content of Si is less than 1.0%, it becomes difficult to sufficiently suppress the eddy current loss of the final grain-oriented electrical steel sheet, and therefore this is not preferable. If the content of Si is more than 5.0%, the workability of the grain-oriented electrical steel sheet falls, so this is not preferable. Accordingly, the content of Si is 1.0 to 5.0%, preferably is 2.5 to 4.5%, more preferably 2.7 to 4.0%.

### (Mn: 0.01 to 0.15%)

The content of Mn (manganese) is 0.01 to 0.15%. Mn forms the inhibitors MnS and MnSe etc. affecting the secondary recrystallization. If the content of Mn is less than 0.01%, the absolute amounts of MnS and MnSe for causing secondary recrystallization are not reached, so this is not preferable. If the content of Mn is more than 0.15%, at the time of slab heating, dissolution of Mn becomes difficult, so this is not preferable. Further, if the content of Mn is more than 0.15%, the precipitated sizes of the inhibitors MnS and MnSe easily become coarser and the optimal size distributions as inhibitors are impaired, so this is not preferable. Therefore, the content of Mn is 0.01 to 0.15%, preferably is 0.03 to 0.13%.

The constituents other than Si and Mn can be ones becoming the constituents contained in ordinary grain-oriented electrical steel sheet.

For example, as constituents other than Si and Mn, by mass%, C: 0.085% or less, acid soluble Al: 0.065% or less, N: 0.012% or less, Cr: 0.30% or less, Cu: 0.40% or less, P: 0.50% or less, Sn: 0.30% or less, Sb: 0.30% or less, Ni: 1.000% or less, and S: 0.015% or less may be included. Further, as other inhibitor forming elements, B, Bi, Se, Pb, Sn, Ti, etc. can also be added. The amounts added may be suitably adjusted. The upper limit of the B content may be 0.080%, the upper limit of the Bi content may be 0.010%, the upper limit of the Se content may be 0.035%, the upper limit of the Pb content may be 0.10%, the upper limit of the Sn content may be 0.10%, and the upper limit of the Ti content may be 0.015%. These optional elements may be included in accordance with known objectives, therefore there is no need to establish lower limit values of the contents of the optional elements. For example, the lower limit values may also be 0%.

The balance besides the above constituents of the steel sheet is comprised of Fe and impurities. In this case, "impurity" elements indicate constituents included in the raw materials or constituents entering in the process of production and allowed in a range not substantially impacting the present embodiment.

The chemical composition of steel sheet can be measured using ICP-AES (inductively coupled plasma-atomic emission spectrometry). Specifically, a 35 mm square test piece taken from the steel sheet is measured by an ICPS-8100 made by Shimadzu etc. (measurement device) under conditions based on a calibration curve prepared in advance, so as to identify the chemical composition. It should be noted that the C and S can be measured using the infrared absorption method after combustion while the N can be measured using the thermal conductimetric method after fusion in a current of inert gas.

### [Method of Production of Grain-Oriented Electrical Steel Sheet]

The process of production of the grain-oriented electrical steel sheet of the present invention will be explained illustratively below. It should be noted that the method of production of the grain-oriented electrical steel sheet according to the present embodiment is just one example and may be changed in any way to an extent not impeding the effect of the present embodiment.

### (Casting Step S1)

In the casting step S1, a slab is prepared. One example of the method of production of a slab is as follows: First, molten steel is produced (smelted). Next, the molten steel is used to produce a slab. The method of production of the slab is not particularly limited, but, for example, continuous casting may be used for producing the slab. Molten steel may also be used to produce an ingot and the ingot bloomed to produce a slab. The thickness of the slab is not particularly limited. The thickness of the slab may, for example, also be 150 mm to 350 mm. The thickness of the slab is preferably 220 mm to 280 mm. As the slab, a thickness 10 mm to 70 mm so-called "thin slab" may be used. If using a thin slab, at the hot rolling step S2, the rough rolling before the finish rolling may be omitted.

The chemical composition of the slab need only be a chemical composition giving rise to secondary recrystallization. The basic composition and optional elements of the slab specifically explained become as follows: It should be noted that the indications of "%" used for the constituents mean "mass%."

Si is an important element in raising the electrical resistance and lowering the core loss. If the content is more than 5.0%, at the time of cold rolling, the material easily cracks and rolling becomes impossible. On the other hand, if lowering the amount of Si, at the time of finish annealing, α→γ transformation occurs and the orientation of the crystals becomes impaired, so 1.0% not affecting the orientation of the crystals in the finish annealing may be made the lower limit. Therefore, the Si content may be 1.0 to 5.0%

Mn and S precipitate as MnS which acts as an inhibitor. If the Mn content is less than 0.01% and the S content is less than 0.005%, there is a possibility that a predetermined amount of effective MnS inhibitor cannot be secured. Further, if the Mn content is more than 0.15% and the S content is more than 0.015%, there is a possibility that dissolution at the time of slab heating becomes insufficient and the secondary recrystallization no longer stably occurs. For this reason, the Mn content may be 0.01 to 0.15% and the S content may be 0.005 to 0.015%.

C is an element effective for control of the primary recrystallized structure in the production process, but has a possibility of detrimentally affecting the magnetic properties if the content in the final product is excessive. Therefore, the C content may also be made 0.085% or less. The preferable upper limit of the C content is 0.080%. C is removed at the later explained decarburization annealing step S5 and the final annealing step S8 and may become 0.005% or less after the final annealing step S8. If the slab contains C, if considering the productivity at the time of industrial production, the lower limit of the C content may be more than 0% and may be 0.001%.

Acid soluble Al is an element bonding with N to form AlN or (Al,Si)N and functioning as an inhibitor in that state. The content of the acid soluble Al may be made 0.012% to 0.065% by which the magnetic flux density becomes higher.

N is an element which, when added in 0.012% or more at the time of steelmaking, forms cavities in the steel sheet called "blisters," so the upper limit of the N content may be 0.012%. N can be included by nitriding in the middle of the production process, so the lower limit is not particularly prescribed and may also be 0%. However, the detection limit of N is 0.0001%, so the substantive lower limit is 0.0001%.

The slab can have added to it B, Bi, Se, Pb, Sn, Ti, etc. as other inhibitor forming elements. The amounts added may be suitably adjusted. The upper limit of the B content may be 0.080%, the upper limit of the Bi content may be 0.010%, the upper limit of the Se content may be 0.035%, the upper limit of the Pb content may be 0.10%, the upper limit of the Sn content may be 0.10%, and the upper limit of the Ti content may be 0.015%. These optional elements may be included in accordance with known objectives, therefore there is no need to establish lower limit values of the contents of the optional elements. For example, the lower limit values may also be 0%.

The balance of the chemical composition of the slab is comprised of Fe and impurities. It should be noted that the "impurities" referred to there are constituents entering the slab due to the ore, scrap, or other raw materials and other various factors in the production process when industrially producing the slab and which are allowed to an extent not substantially having an effect on the grain-oriented electrical steel sheet according to the present invention.

Considering the strengthening of the inhibitor function by formation of compounds and the effect on the magnetic properties, any known element may be included (added) in place of part of the Fe. As the any element to be included in the slab in place of part of the Fe, for example, Cu, P, Sb, Sn, Cr, Ni, etc. may be mentioned. One or more of any of these may be added to the slab. The upper limit value of the Cu content may be 0.30%, the upper limit value of the P content may be 0.50%, the upper limit value of the Sb content may be 0.30%, the upper limit value of the Sn content may be 0.30%, the upper limit value of the Cr content may be 0.30%, and the upper limit value of the Ni content may be 1.000%. These optional elements may be included in accordance with known objectives, therefore there is no need to establish lower limit values of the contents of the optional elements. For example, the lower limit values may also be 0%.

The chemical composition of the slab can be measured using ICP-AES (inductively coupled plasma-atomic emission spectrometry). Specifically, a 35 mm square test piece taken from the slab is measured by an ICPS-8100 made by Shimadzu, etc. (measurement device) under conditions based on a calibration curve prepared in advance, so as to identify the chemical composition. It should be noted that the C and S can be measured using the infrared absorption method after combustion while the N can be measured using the thermal conductimetric method after fusion in a current of inert gas.

### (Hot Rolling Step S2)

The hot rolling step S2 is a step of hot rolling a slab heated up to a predetermined heating temperature (for example, 1100°C to 1400°C) to obtain hot rolled steel sheet. The heating temperature at the time of hot rolling may, for example, be 1100°C or more from the viewpoint of securing the temperature at the time of hot rolling and further may be 1280°C or less from the viewpoint of not causing complete dissolution of the inhibitor constituent AlN. It should be noted that if making AlN and MnS the main inhibitors, the heating temperature at the time of hot rolling may be made the 1300°C or more where these inhibitor constituents completely dissolve.

### (Hot Rolled Steel Sheet Annealing Step S3)

The hot rolled steel sheet annealing step S3 is a step for annealing the hot rolled steel sheet obtained at the hot rolling step S2 immediately or in a short time to obtain annealed steel sheet. The annealing may be performed a 750°C to 1200°C in temperature region for 30 seconds to 30 minutes. The annealing is effective for raising the magnetic properties of the product.

### (Cold Rolling Step S4)

The cold rolling step S4 is a step for cold rolling one time the annealed steel sheet obtained at the hot rolled steel sheet annealing step S3 or cold rolling it several times (two times or more) interspaced with annealing (process annealing) (for example, for a total cold rolling rate of 80% to 95%) to obtain cold rolled steel sheet. The thickness of the cold rolled steel sheet may for example be 0.10 mm to 0.50 mm.

### (Decarburization Annealing Step S5)

The decarburization annealing step S5 is a step for annealing the cold rolled steel sheet obtained at the cold rolling step S4 for decarburization and for obtaining a decarburized annealed steel sheet with primary recrystallization (cold rolled steel sheet subjected to decarburization annealing step). The decarburization annealing may be performed at for example 700°C to 900°C for 1 minute to 3 minutes.

By annealing the cold rolled steel sheet for decarburization, the C constituent contained in the cold rolled steel sheet is removed. For removing the C constituent contained in the cold rolled steel sheet, the decarburization annealing is preferably performed in a wet atmosphere.

### (Nitriding Step S6)

The nitriding step S6 is a step performed in accordance with need for adjusting the strength of an inhibitor in secondary recrystallization. Nitriding is a treatment that increases the amount of nitrogen in cold rolled sheets by approximately 40 ppm to 200 ppm from the start of the decarburization annealing step to the beginning of the secondary recrystallization in the finish annealing step. As the nitriding, for example, treatments for annealing the decarburized annealed steel sheet in an atmosphere containing ammonia or other nitriding gas, treatment for coating an annealing separator containing powder of MnN etc. having a nitriding ability on the decarburized annealed steel sheet at the later explained annealing separator coating step S7, etc. may be mentioned.

### (Annealing Separator Coating Step S7)

The annealing separator coating step S7 is a step of coating the decarburized annealed steel sheet with an annealing separator. As the annealing separator, for example, an annealing separator having alumina (Al₂ O₃) as its main constituent can be used. The decarburized annealed steel sheet after coating by the annealing separator is wound up into a coil and in that state is finish annealed at the next finish annealing step S8.

It should be noted that, if forming a glass film containing Mg₂ SiO₄, an annealing separator having magnesia (MgO) as its main constituent is used.

### (Finish Annealing Step S8)

The finish annealing step S8 is a step of finish annealing the decarburized annealed steel sheet on which the annealing separator was coated so as to cause secondary recrystallization. This finish annealing step S8 accompanied with secondary recrystallization causes progression of secondary recrystallization in a state suppressing growth of primary recrystallized grains by an inhibitor so as to make the {100}<001>oriented grains preferentially grow and cause the magnetic flux density to be strikingly improved.

It should be noted that, in the above-mentioned annealing separator coating step S7, if coating magnesia (MgO), a glass film containing Mg₂ SiO₄ is formed by this finish annealing step S8. It should further be noted that, in this embodiment, such a glass film is also deemed included in the base steel sheet (later explained finish annealed steel sheet). Therefore, if, for example, the finish annealed steel sheet is formed with a glass film, the "surface of the finish annealed steel sheet" is deemed to mean the surface of the glass film. By forming the glass film, the properties of the finally obtained grain-oriented electrical steel sheet can be expected to be further enhanced.

### (Groove Forming Step S9)

The groove forming step S9 is a step for forming grooves in the steel sheet for the purpose of magnetic domain control (magnetic domain refinement). The grooves can be formed by laser, electron beam, plasma, mechanical method, etching, or other known technique.

In the flow explained above, the groove forming step S9 is performed after the finish annealing step S8. However, the groove forming step S9 may also be performed at the steel sheet after the cold rolling step S4 (that is, the cold rolled steel sheet). In this case as well, it is possible to maintain the ideal cross-sectional shape of the linear groove G by magnetic domain refinement. Therefore, the time at which the groove forming step S9 is performed may be before or after the finish annealing step S8. However, if performing the later explained tension coating forming step S10, it is necessary to perform the groove forming step S9 before that step S10. Details of the shape of the grooves, formation techniques, etc. will be explained later.

### (Tension Coating Forming Step S10)

The tension coating forming step S10 is a step of coating a groove forming surface of finish annealed steel sheet with a coating solution and baking it on so as to form an insulating coating (tension coating) on the groove forming surface. By forming an insulating coating (tension coating), the properties of the finally obtained grain-oriented electrical steel sheet can be expected to be further improved.

In this case, as the coating solution, one containing for example phosphoric acid, a phosphate, chromic anhydride, a chromate, alumina, or a silica compound is preferably used. The baking may for example be performed under conditions of 350°C to 1150°C for 5 seconds to 300 seconds.

### [Wound Core]

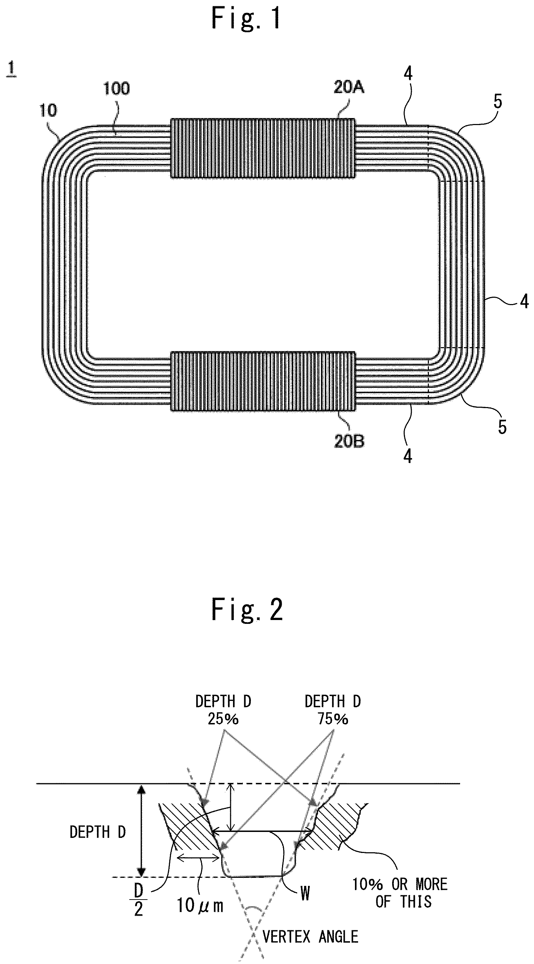

Next, referring to FIG. 1, a wound core according to one embodiment of the present invention will be explained. FIG. 1 is a plan view showing one example of a wound core according to one embodiment of the present invention. It should be noted that, after this, a wound core transformer will sometimes simply be called a "transformer."

A wound core 10 is formed by winding up grain-oriented electrical steel sheet 100. The shape of the wound core 10 is not limited to the illustrated rounded corner rectangular shape. For example, it can also be made an elliptical shape, oblong shape, or rounded corner shape.

By provision of the primary coil 20A and secondary core 20B wound around the wound core 10, it is possible to form a transformer 1.

The primary winding 20A and secondary winding 20B are wound around the wound core 10 at facing positions at the wound core 10. For the primary winding 20A and secondary winding 20B, a known electric conductor can be used. For example, a highly electrically conductive metal wire covered by an insulator can be used. As the metal wire, for example, copper, copper alloy, aluminum, an enamel covered copper wire obtained by coating and baking on an insulating material, etc. can be used. For the insulator for covering the surface of the metal wires, for example, polyvinyl chloride, polyethylene, a fluororesin, a polyester, etc. can be used.

The number of turns of the primary winding 20A and the number of turns of the secondary winding 20B are not especially limited, but the number of turns of the primary winding 20A and the number of turns of the secondary winding 20B can be determined in accordance with the specifications of the wound core transformer 1.

At the time of use, the primary winding 20A is connected to a power source side circuit and supplied with AC voltage from the power source. By the primary winding 20A being supplied with AC voltage, magnetic flux is generated at the wound core 10. Due to the changes in the magnetic flux generated, at the secondary winding 20B connected to the circuit at the load side, voltage is generated corresponding to the number of turns of the primary winding 20A and the number of turns of the secondary winding 20B.

### [Grooves of Grain-Oriented Electrical Steel Sheet]

The grain-oriented electrical steel sheet forming the wound core is treated for magnetic domain refinement to lower the core loss by the steel sheet surface being formed with grooves extending in a direction crossing the rolling direction (RD direction) and with a groove depth direction comprised of the sheet thickness direction (ND direction). It should be noted that the grooves need only be provided so as to cross the rolling direction. The direction of extension of the grooves and the rolling direction need not necessarily be orthogonal, but the grooves may be provided in a direction forming a 0 to 30° angle with the direction perpendicular to rolling. Further, the grooves need not necessarily have straight line shapes when viewed from the sheet thickness direction (when viewing grooves planarly) and may also have bow shapes. The shapes of the grooves explained below are measured by removing from the final product at least the glass film and insulating coating of the groove inside parts by pickling etc.

The above grooves are formed at the steel sheet surface at a 2 to 20 mm pitch (interval distance) in the steel sheet rolling direction (RD direction). If the pitch of the grooves is less than 2 mm, the effect of magnetic domain refinement becomes saturated and the effect of reduction of the eddy current loss becomes harder to obtain. This is therefore not preferable. If the pitch of the grooves is more than 20 mm, the effect of magnetic domain refinement decreases, so the effect of improvement of the core loss becomes insufficient. This is therefore not preferable. The preferable pitch of the grooves is 2 to 10 mm.

It should be noted that the pitch in the rolling direction may be measured by for example the following method. That is, the set of any two grooves adjoining each other in the planar view is examined. Next, the distance between center points in the width directions of these grooves is measured at several locations in the rolling direction. The average value of these may be made the pitch in the rolling direction of that set of grooves.

FIG. 2 is a cross-sectional view of a groove part according to one embodiment of the present invention (cross-sectional view vertical to direction of extension of groove). In this view, the groove part is shaped close to a trapezoid, but the groove shape may also be bow shaped. In one embodiment of the electrical steel sheet of the present invention, the depth D of the groove part is 10 µm to 40 µm in range in the sheet thickness direction (ND direction). If the depth D is less than 10 µm, the amount of formation of magnetic poles from the groove wall surfaces becomes smaller, the domains are not refined, and a sufficient effect of reduction of core loss is not obtained. If the depth D is more than 40 µm, the domains are refined, but the drop in magnetic flux density due to groove formation becomes greater and a sufficient effect of reduction of core loss is not obtained. The preferable depth is 15 µm to 30 µm.

### (Measurement of Depth D of Grooves)

The method of measurement of the "depth D" according to the present invention is as follows:
Any groove is selected. The maximum depth at the cross section of any point of the groove (surface vertical to direction of extension of groove) is defined as the depth D of the groove and is measured using a laser microscope (3D laser microscope using confocal optical system using pinhole). The depth is measured in the normal direction of the steel sheet surface (assuming inside direction of steel sheet to be positive) using the height of the steel sheet surface adjoining an edge of the groove as 0.

The "width W of the grooves" referred to in the present invention means the width of the grooves at the depth of half of the groove depth D (D/2). The width W of the grooves is 10 µm to 200 µm in range. If the width W is less than 10 µm, the magnetic flux leaking from a wall surface of a groove enters the wall surface of the groove at the opposite side, but the amount of formation of magnetic poles becomes smaller, the magnetic domains are not refined, and a sufficient effect of reduction of core loss is not obtained. If the width W is more than 200 µm, the effect of reduction of core loss becomes saturated, the laser power required for forming the grooves becomes greater, and the production costs just swell. The preferable width W is 30 to 100 µm.

### (Measurement of Width W of Grooves)

The method of measurement of the "width W of the grooves" according to the present invention is as follows:
Any groove of the electrical steel sheet is selected. Between the widths of the groove where the groove depths D of the cross sections of any point (A) of the groove and the point (B) 3 mm apart from that in the longitudinal direction of the groove (cross sections vertical to the direction of extension of the groove) become half (D/2), the broader one is measured as "w" and the narrower one as "w'" using a laser microscope (3D laser microscope using confocal optical system using pinhole). The groove width W is the average value of these values.

In a groove according to the present invention, as shown in FIG. 2, in the cross section vertical to the direction of extension of the groove, it is possible to define an angle formed when facing wall surfaces of the groove are extended in the sheet thickness direction (ND direction) (sometimes also called the "vertex angle"). In this case, a "wall surface of a groove" indicates a surface of the groove at a depth of 25 to 75% of the depth of the groove. To determine the vertex angle, points of 25% depth of the wall surface to points of 75% depth are joined by lines which are then extended in an inside direction of sheet thickness. This vertex angle is 90° or less in range. When the facing wall surfaces are parallel, a vertex angle cannot be formed, and thus the vertex angle is more than 0°. If the vertex angle is more than 90°, the wall surfaces of the groove form gently slanted surfaces, the leakage of the magnetic flux falls, and a sufficient effect of reduction of the core loss cannot be obtained. The reason is believed to be as follows although not desiring to be bound to any specific theory. In grain-oriented electrical steel sheet in which grooves are formed, the magnetic flux reaching one wall surface of a groove through the inside of the steel sheet leaks from the groove wall (that is, due to leakage of magnetic flux), the magnetostatic energy rises, and the main magnetic domains are refined for reducing the magnetostatic energy and become causes behind the effect of magnetic domain refinement. If the wall surfaces are gently slanted surfaces, the magnetic flux reaching one wall surface of the groove through the inside of the steel sheet flows along the wall surface comprised of that gently slanted surface so leakage from the wall surface of the groove is suppressed. As a result, the magnetostatic energy does not rise and the main magnetic domains are not refined for reducing the magnetostatic energy and a sufficient effect of magnetic domain refinement cannot be obtained.

If forming the grooves using a laser, according to the example of the lasering conditions below, it is possible to obtain electrical steel sheet able to form a wound core according to the present embodiment, that is, electrical steel sheet having predetermined grooves.

In the lasering step, the surface of the steel sheet (only one surface) is lasered to form on the surface of the steel sheet a plurality of grooves extending in a direction crossing the rolling direction at a 2 to 20 mm range of desired pitch along the rolling direction.

In the lasering step, the lasering apparatus may emit a laser beam toward the surface of the steel sheet by driving rotation of a polygon mirror and make the laser beam scan a direction forming a 0 to 30° angle with the direction perpendicular to rolling.

At the same time as the lasering, air or an inert gas or other assist gas may be blown at the portion of the steel sheet which is lasered. The inert gas is, for example, nitrogen, argon, etc. The assist gas acts to remove the constituents melted or vaporized from the steel sheet due to lasering. By blowing the assist gas, the laser beam reaches the steel sheet without being obstructed by the melted or vaporized constituents, whereby the grooves and strain applied parts in their vicinities are stably formed.

As the laser source, for example, a fiber laser, YAG laser, semiconductor laser, or CO₂ laser or other high output laser generally used for industrial purposes can be used. Further, so long as it is possible to stably form the grooves and strain applied parts in the vicinities of the same, a pulse laser or continuous wave laser may also be used as the laser source. As the laser, use of a single mode laser high in focusing ability for formation of grooves is preferable from the viewpoint of obtaining grooves with a vertex angle of the present embodiment of 90°or less, that is, steep wall surfaces.

As one example of lasering, for example, it is possible to form the groove shape of the present embodiment by making the laser output 200W to 3000W and using a top hat type laser with a high power at the center part of the laser to form the grooves.

The focused spot size of the portion where the beam size becomes the maximum may be set to 10 µm to 200 µm, and the beam scan speed may be set to 5 m/s to 50 m/s. These lasering conditions are suitably adjusted so that the desired grooves and strain applied parts in their vicinities are obtained.

### [Residual Stress Due to Tensile Strain Present at Bent Part of Wound Core]

According to the present embodiment, grooves are formed in the steel sheet surface for magnetic domain refinement. It is believed that magnetic flux leaks from the walls of the grooves, the magnetostatic energy rises, and therefore the main magnetic domains are refined to reduce the magnetostatic energy. However, at a wound core, at the bent parts, usually the magnetic domain structure changes so that leakage magnetic flux is kept down and as a result the magnetostatic energy does not rise, the main magnetic domains are not refined for reducing the magnetostatic energy, and a sufficient effect of magnetic domain refinement cannot be obtained. This becomes a cause of deterioration of the building factor of the wound core. Therefore, in the present embodiment, by forming grooves at the bent parts of the wound core, in particular grooves of an acute shape vertex angle of 90° or less, in the vicinities of the grooves, tensile strain is applied in the steel sheet rolling direction and predetermined residual stress is created by that strain. This residual stress gives rise to the effect of induced magnetic anisotropy at the bent part, in particular in the vicinities of the grooves. Magnetic flux leakage at the groove parts rise and the magnetic domains are refined.

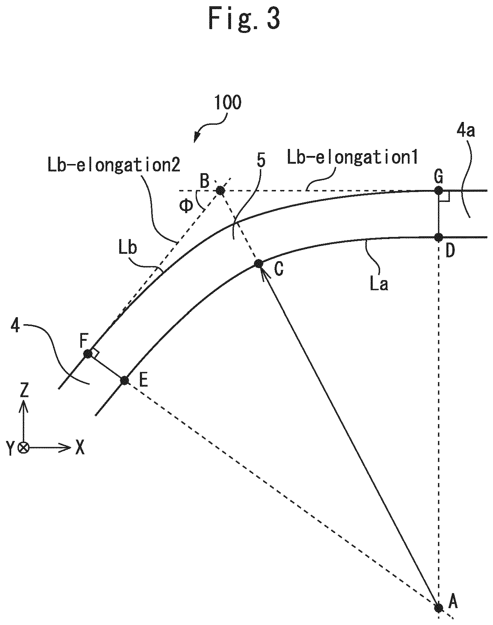

Hereafter, a bent part of the wound core will be explained. In the example of the wound core 10 shown in FIG. 1, the wound core is substantially rectangular (square shaped) and has four bent parts 5 (vertices) and four flat parts 4 (sides) sandwiching the bent parts. While referring to FIG. 3, a bent part 5 will be explained in further detail. FIG. 3 is a view schematically showing one example of a bent part (curved part) 5 of grain-oriented electrical steel sheet 100. The "bending angle of the bent part 5" means the angular difference occurring between a line segment of a rear side in the bending direction and a line segment of a front side at the bent part 5 of the grain-oriented electrical steel sheet 100 and is expressed as the angle φ of the supplementary angle of the angle formed by the two imaginary lines Lb-elongation1, Lb-elongation2 obtained by extending the straight line parts of the surfaces of the flat parts 4, 4a at the two sides sandwiching the bent part 5 at the outside of the grain-oriented electrical steel sheet 100. At this time, the points where the extended lines separate from the steel sheet surface are on the boundaries of the flat part 4 and bent part 5 at the outside of the steel sheet. In FIG. 3, these are the point F and point G.

Further, the intersections of lines vertical to the steel sheet outside surface extending from the point F and point G and the surface of the steel sheet inside surface are made the point E and point D. The point E and point D are on the boundaries of a flat part 4 and bent part 5 at the surface of the steel sheet inside surface side.

Further, in the present invention, a "bent part 5" is a portion of the grain-oriented electrical steel sheet 100 surrounded by the above point D, point E, point F, and point G in a side view of the grain-oriented electrical steel sheet 100. In FIG. 3, the steel sheet surface between the point D and the point E, that is, the inside surface of the bent part 5, is shown as "La" while the steel sheet surface between the point F and the point G, that is, the outside surface of the bent part 5, is shown as "Lb".

Further, this figure shows the inside radius of curvature "r" at the side view of the bent part 5. The radius of curvature "r" of the bent part 5 is obtained by approximating La by an arc passing through the point E and the point D. The smaller the radius of curvature "r," the more acute the bend of the curved part of the bent part 5, while the greater the radius of curvature "r", the gentler the bend of the curved part of the bent part 5.

It should be noted that, the method of measurement of the radius of curvature "r" of the bent part 5 is also not particularly limited, but for example measurement can be performed by observation at 200X using a commercially available microscope (Nikon ECLIPSE LV150). Specifically, the center of curvature A point is found from the results of observation. As the method for finding this, for example, if defining the intersecting point of the line segment EF and the line segment DG extended to the inside at the opposite side from the point B as A, the magnitude of the radius of curvature "r" corresponds to the length of the line segment AC. In this case, when connecting the point A and the point B by a line, the intersecting point on the arc DE at the inside of the steel sheet bent part is made C.

A bent part 5 can be obtained by bending grain-oriented electrical steel sheet 100. Due to the bending, tensile strain is formed at the bent part 5 and its vicinity and residual stress occurs due to the tensile strain. If the processing speed at the bending is too slow, the residual stress will not become greater while if it is too fast, fracture or plastic deformation sometimes occurs, so for example bending by a 5 mm/s or more and 100 mm/s or less strain speed to form the bent part 5 or otherwise suitably adjusting the conditions of the bending, it is possible to obtain tensile strain at the desired position and magnitude, in other words, possible to obtain residual stress at the desired position and magnitude.

According to the present embodiment, a position with residual stress due to tensile strain is within a range within 10 µm from a wall surface of a groove present at a bent part of the wound core in the rolling direction (RD direction). That range within 10 µm is prescribed at the cross section vertical to the direction of extension of the groove. In range of more than 10 µm in the rolling direction from the wall surface, the effect of residual stress due to strain on the groove is small and the effect of magnetic domain refinement due to the groove cannot be sufficiently raised. In this case, a "wall surface" of a groove indicates the surface of the groove present at a depth of 25 to 75% of the depth of the groove.

The residual stress due to tensile strain is 10 MPa or more residual stress in the rolling direction (RD direction). If the residual stress is less than 10 MPa, the residual stress due to strain is small and the effect of magnetic domain refinement due to strain cannot be sufficiently raised. The upper limit of the residual stress is not particularly prescribed. The substantive upper limit is a yield strength of the material, but if too large, conversely the core loss and other magnetic properties worsen, so overall it may be 30 MPa or less. Further, excessive residual stress is liable to have an effect on the magnetic properties, so an upper limit of the residual stress may be prescribed and overall may be 10 MPa or less.

There is a region with residual stress due to compressive strain in the rolling direction (RD direction) of 10 MPa or more present in 10 area% or more in the range of within 10 µm in the rolling direction (RD direction) from the wall surface of the groove present at a bent part of a wound core. If the region is less than 10 area%, the effect of magnetic domain refinement cannot be sufficiently obtained. The upper limit of the area% of that region is not particularly prescribed and may also be 100 area%. However, the magnetic domain refinement effect becomes slightly saturated. Further, if the residual stress is large and the area% is large, the core loss lowering effect due to the magnetic domain refinement effect and the effect of deterioration of the core loss due to stress as explained above cancel each other out and sometimes the core loss and other magnetic properties deteriorate. The upper limit of the area% of that region may also be adjusted. Overall, it may be 50 area% or less. Further, the upper limit of the area% of that region may also be adjusted in accordance with the desired magnetic properties. It may be 30 area% or less and may be 20 area% or less.

### (Measurement of Residual Stress Due to Strain)

The residual stress due to the strain is measured by EBSD.

Map measurement is performed by electron backscatter diffraction (EBSD) using as the measurement region a region of the total thickness in the sheet thickness direction and a width of two times the emitted width of the energy beam (rolling direction) centered about the emitted position of the energy beam in the cross section in the sheet thickness direction vertical to the scanning direction of the energy beam (in grain-oriented electrical steel sheet, an energy beam is generally emitted while scanning the sheet width direction, in that case, cross section in the sheet thickness direction vertical to sheet thickness direction). At the time of map measurement, an electron beam is emitted in 2 µm or less steps at a sample with an observed surface (steel sheet surface) tilted 70 degrees with respect to the emission direction of the electron beam (tilt angle is made 0 degree in case where direction of emission of electron beam and cross section of steel sheet are vertical) to obtain an EBSD image. The obtained image is stored as 956×956 pixels. The strain is calculated using Cross Court 4 of BLG Vantage to calculate the strength of the strain.

As the method for derivation of the area%, the formula (Area of region with compressive strain of 10 MPa or more/(groove depth (25 to 75% depth)×10 µm)×100 was used. FIG. 2 schematically shows the range of within 10 µm from side surface or bottom surface of a groove in the cross section vertical to the direction of extension of the grooves. Regarding the calculation of the area%, the surface for map measurement is made the surface including a point between the point of start of formation of a groove by laser and the point of end of the same.

### (Measurement of Building Factor (BF))

The building factor (BF) is measured based on the core loss (W/kg) of the core and the core loss (W/kg) of the steel sheet.

The building factor is measured by the following method. For a wound core, measurement using the excitation current method described in JIS C 2550-1:2011 is performed under conditions of a frequency of 50Hz and a magnetic flux density of 1.7T to measure the core loss value (watt loss) WA of the wound core. Further, from grain-oriented electrical steel sheet used for a core (sheet width 152.4 mm), a width 60 mm× length 300 mm sample is taken. This sample was measured by the electrical steel sheet single sheet magnetic property test using the H coil method described in JIS C 2556:2015 under conditions of a frequency of 50Hz and magnetic flux density of 1.7T to measure the core loss (watt loss of steel sheet) WB of a single sheet of the base steel sheet. The obtained core loss WA was divided by the core loss WB to find the building factor (BF).

In the present embodiment, the core length of the wound core body 10 is not particularly limited. If the number of the bent parts 5 is the same, even if the core length at the wound core body 10 changes, the volume of the bent parts 5 remains constant, so the core loss occurring at the bent parts 5 is constant. The longer the core length, the smaller the volume ratio of the bent parts 5 of the wound core body 10, so the smaller the effect on core deterioration. Accordingly, the core length of the wound core body 10 is preferably long. The core length of the wound core body 10 may be 1.0 m or more, preferably is 1.5 m or more, more preferably is 1.7 m or more. It should be noted that, in the present invention, the "core length" of the wound core body 10 means the perimeter of the grain-oriented electrical steel sheet 100 at the center point in the stacking direction of the wound core body 10 viewed from the side surface.

### EXAMPLES

Below, examples will be shown while explaining the grain-oriented electrical steel sheet of the present invention more specifically. It should be noted that the examples shown below are just illustrations of the grain-oriented electrical steel sheet according to the embodiments. The grain-oriented electrical steel sheet according to the embodiments is not limited to the examples shown below.

A slab prepared to give grain-oriented electrical steel sheet having a chemical composition containing, by mass%, Si: 3.0%, C: 0.080%, acid soluble Al: 0.028%, N: 0.010%, Mn: 0.12%, Cr: 0.05%, Cu: 0.04%, P: 0.01%, Sn: 0.02%, Sb: 0.01%, Ni: 0.005%, S: 0.007%, and Se: 0.001% and having a balance comprised of Fe and impurities was hot rolled to obtain thickness 2.3 mm hot rolled steel sheet.

Next, the hot rolled steel sheet was annealed under temperature conditions of heating at 1000°C for 1 minute.

After the annealing, the steel sheet was cold rolled to obtain thickness 0.23 mm cold rolled steel sheet. Next, this cold rolled steel sheet was annealed for decarburization under temperature conditions of heating at 800°C for 2 minutes, then an annealing separator containing magnesia (MgO) as its main constituent was coated on the surface of the cold rolled steel sheet.

Next, the cold rolled steel sheet on which the annealing separator was coated was finish annealed under temperature conditions of heating at 1200°C for 20 hours. As a result, steel sheet having the above-mentioned chemical composition, controlled in crystal orientation so that the axis of easy magnetization of the crystal grains and rolling direction matched, and having a glass film formed on its surface was obtained.

Next, the surface of the steel sheet was lasered to form at least one of grooves or strain at the surface of the steel sheet.

For the lasering apparatus, a fiber laser made by IPG was used. The lasering conditions were adjusted to give a laser output of 1800W, a laser scan speed of 50 m/s, and a laser scan pitch (pitch PL) of 3 mm. The focused spot size of the portion where the beam size of the laser beam in the steel sheet rolling direction became the maximum was 10 µm to 200 µm and was adjusted by a top hat type laser to give grooves of the vertex angles shown in Table 1. Linear grooves of widths "w" of about 50 µm and depths D of about 20 µm were formed at a 3 mm pitch in a direction orthogonal to the rolling direction.

Each steel sheet was used as a material to produce a wound core. The core length was made 1.0 m. Four curved parts were provided. By bending, tensile strain was caused at the bent parts of the wound core and residual stress shown in Table 1 was applied. This residual stress was measured by the above-mentioned measurement method. It is residual stress at a position within 10 µm in the rolling direction (RD direction) from a wall surface of a groove present at a bent part of the wound core.

### [Evaluation of Magnetic Properties]

A width 60 mm x length 300 mm sample including a sheet width center position of grain-oriented electrical steel sheet of each test no. was taken. The length of the sample was parallel to the rolling direction.

Using this sample, the magnetic flux density (T) was found by the single sheet magnetic property test (SST test) based on JIS C2256 (2011). Specifically, the sample was subjected to a 800A/m magnetic field to find the magnetic flux density (T).

Further, using the above sample, the core loss W_{1 7 / 5 0} (W/kg) when the frequency was 50Hz and the maximum flux density was 1.7T was measured based on JIS C2256 (2011).

Further, the building factor (BF) was also measured by the above-mentioned measurement method. The measurement results are shown in Table 1.

**[Table 1]**

| No. | Vertex angle (°) | Groove depth (µm) | Maximum value of residual stress due to tensile strain (MPa) | Area ratio of region with residual stress of 10 MPa or more (%) | BF | Magnetic flux density (T) | |
|---|---|---|---|---|---|---|---|
| 1 | 30 | 20 | 30 | 28 | 1.03 | 1.91 | Inv. ex. |
| 2 | 60 | 20 | 25 | 18 | 1.05 | 1.91 | Inv. ex. |
| 3 | 90 | 20 | 20 | 12 | 1.08 | 1.90 | Inv. ex. |
| 4 | 120 | 20 | 10 | 9 | 1.10 | 1.89 | Comp. ex. |
| 5 | 150 | 20 | 5 | 5 | 1.15 | 1.88 | Comp. ex. |
| 6 | 90 | 8 | 25 | 9 | 1.10 | 1.92 | Comp. ex. |
| 7 | 90 | 10 | 23 | 10 | 1.09 | 1.91 | Inv. ex. |
| 8 | 90 | 35 | 25 | 12 | 1.08 | 1.88 | Inv. ex. |
| 9 | 90 | 50 | 11 | 13 | 1.13 | 1.86 | Comp. ex. |
| 10 | 90 | 20 | 12 | 8 | 1.11 | 1.91 | Comp. ex. |
| 11 | 120 | 20 | 20 | 12 | 1.12 | 1.90 | Comp. ex. |

From the results, it will be understood that in electrical steel sheet having residual stress due to strain at the grooves and bent parts according to an embodiment of the present invention, the building factor (BF) is further reduced from the comparative examples.

### REFERENCE SIGNS LIST

1. transformer
10. wound core
20A. primary winding
20B. secondary winding
100. grain-oriented electrical steel sheet

## Claims

1. A wound core comprised of grain-oriented electrical steel sheet,
the grain-oriented electrical steel sheet having a steel sheet surface on which is formed a groove extending in a direction crossing a rolling direction and having a groove depth direction comprised of a sheet thickness direction,
a pitch in the steel sheet rolling direction of the groove is 2 to 10 mm,
a depth of the groove is 10 µm or more and 40 µm or less and a width of the groove is 10 µm or more and 200 µm or less,
an angle formed when facing wall surfaces of the groove, herein, surfaces of the groove present at depth of 25 to 75% of the depth of the groove being defined as "wall surfaces", are stretched in the sheet thickness direction is 90° or less,
in a range of within 10 µm from a wall surface of a groove present at a bent part of the wound core to the steel sheet rolling direction, a region in which 10 MPa or more residual stress is present due to tensile strain in the steel sheet rolling direction is 10 area% or more.
